# EUROPEAN PATENT SPECIFICATION

(11) **EP 2 894 115 B1**
(45) Date of publication and mention of the grant of the patent: **17.08.2016**
(21) Application number: 14150761.6
(22) Date of filing: 10.01.2014
(51) Int. Cl.: B65G 15/64, F16G 1/20, F16G 1/28

(54) **A conveyor belt and conveyor arrangement provided with such a conveyor belt, and a method of producing such a conveyor belt**
Förderband und Förderanordnung mit einem solchen Förderband und Verfahren zur Herstellung eines solchen solchen Förderbands
Courroie de transport, dispositif convoyeur équipé d'une telle courroie et procédé de production de ladite courroie

(43) Date of publication of application: 15.07.2015
(73) Proprietor: Sandvik Intellectual Property AB, 811 81 Sandviken (SE)
(72) Inventor: Lord, Martin, SE-806 28 Gävle (SE); Nebes, Ernst, SE-811 95 Järbo (SE)

(56) References cited:
- FR-A- 1 483 627
- US-A- 5 911 307

## Description

### TECHNICAL FIELD

The present invention relates to a conveyor belt provided with at least one guide rim attached thereto, wherein the guide rim extends in a longitudinal direction of the conveyor belt such that it enables guiding of the conveyor belt along a lateral guide surface on an outer periphery of a roll or the like by means of which the direction of the conveyor belt is changed and by means of which the conveyor belt is subjected to a predetermined bending, and wherein the guide rim has a contact surface that is in contact with the conveyor belt.

The guide rim may comprise a continuous rim or a number of discrete, and thereby separated, rim sections arranged along a line on the peripheral surface of the conveyor belt. Thus, the invention is not delimited only to rims comprised by a continuous guide rim. The mentioned lateral guide surface on a roll may be defined by a groove provided in the roll, a lateral surface of a sheave (if the roll is formed by a plurality of sheaves), or a lateral end surface of the roll or any similar lateral surface provided on a roll and suitable for the mentioned purpose of guiding a guide rim of a conveyor belt.

The invention also relates to a conveyor arrangement provided with such a conveyor belt and a method of producing such a conveyor belt, by which method the contact surface of the guide rim is bonded to a peripheral surface of the conveyor belt by means of an adhesive provided between said contact surface and said peripheral surface.

### BACKGROUND OF THE INVENTION

Conveyor arrangements comprising a belt guided by a number of rolls or the like are well known and are used in a vast number of different applications in different processes, typically industrial processes. The belt material may differ depending on the specific application. However, there is often provided a guide rim thereon in order to enable the belt to be held laterally in a predetermined position with regard to the rolls or the like that it is supported by and guided by. The guide rim extends longitudinally in the longitudinal direction of the belt. It may extend continually or discontinuous along the belt. The roll, in its turn, is provided with a lateral guide surface with which the guide rim engages for the purpose of preventing the belt from being displaced laterally with regard to the roll or rolls.

Typically, the guide rim is made of a softer material than the belt itself and attached to the latter by means of an adhesive such as a glue or the like that is applied to the surface of the belt and/or to a contact surface of the guide rim prior to the positioning of the latter on the belt. In many applications, the belt is made of metal, preferably steel, and the guide rim is made of rubber. The adhesive may be any suitable adhesive, such as glue or the like, that enables a chemical bonding of the rubber to the metal.

Document FR 1 483 627 A discloses a conveyor belt according to the preamble of claim 1.

Due to several reasons, such as the chemical environment to which the belt is subjected to when used in a specific process, and the physical strains that the guide rim is subjected to, the latter may have a tendency to lose its bonding to the belt, thereby not contributing to its intended lateral positioning and guiding of the belt with regard to the roll or rolls around which the belt extends. Prior art seeks to solve this problem by presenting adhesives and rim materials that will ensure a sufficient bonding of the guide rim to the belt over time, and with regard taken to the specific conditions of different applications.

Thus, it is an object of the present invention to present a conveyor belt provided with a guide rim, the design of which will promote an improved adhesion of the guide rim to the conveyor belt.

It is also an object of the invention to present a method of producing a conveyor belt as defined hereinabove or hereinafter.

### SUMMARY OF THE INVENTION

The object of the invention is achieved by means of the conveyor belt as defined in the appended claim 1.

Upon bending of the conveyor belt around a roll or the like, with which the guide rim engages, the guide rim will be subjected to a corresponding bending. If the guide rim does not present the induced tensile stresses and the induced compressive stress respectively, as suggested by the present invention, a compressive stress will be induced in the opposite lateral regions of said cross section of the contact surface of the of the guide rim that is in contact with the conveyor belt, and a tensile stress will be induced in a region between these lateral regions upon a predetermined bending of the conveyor belt. The combination of such stresses and the further strain, such as lateral forces on the guide rim caused by the interaction with the lateral guide surface of a roll which the guide rim will be subjected to during the bending thereof, will be detrimental to the bonding between the guide rim and the conveyor belt surface and may finally cause the breaking of such bonding. By inducing the aforementioned residual stresses in the guide rim, and preferably by adapting the level thereof to an assumed predetermined bending of the conveyor belt, which depends on the conceived application, a stress condition that is favourable to the endurance of the adhesion between the conveyor belt and the guide rim can be achieved. If the level of the residual stresses is properly adapted, the maximum tensile forces that appear at the joint between the contact surface of the guide rim that is in contact with the conveyor belt and the peripheral surface of the conveyor belt during the use of the conveyor belt with repeated bending of segments thereof passing over the rolls can be reduced and the endurance of the joint can be improved as a result thereof.

According to a preferred embodiment, the level of the induced tensile stresses and the induced compressive stress respectively are adapted to the dimension of said predetermined bending of the conveyor belt, such that the maximum tensile stresses generated at the contact surface upon said predetermined bending is less than the maximum tensile stresses induced at said surface when the conveyor belt is not subjected to bending in the longitudinal direction thereof.

According to an yet preferred embodiment, the level of the induced tensile stresses and the induced compressive stress respectively are adapted to the dimension of said predetermined bending of the conveyor belt, such that upon the conceived bending of the conveyor belt, the absolute value of the residual stresses in the region of said contact surface is reduced compared to when the conveyor belt is not subjected to bending in the longitudinal direction thereof.

According to yet another embodiment, the absolute value of the residual stresses in the region of the contact surface are reduced to less than half of its value, when subjected to said predetermined bending, compared to when the conveyor belt is not subjected to bending in the longitudinal direction thereof.

According to yet another embodiment, the level of said induced tensile stress is adapted to a predetermined bending of the conveyor belt such that it becomes generally zero when the conveyor belt is subjected to said predetermined bending.

According to the present invention as defined hereinabove or hereinafter, the conveyor belt is a metal conveyor belt and the guide rim comprises rubber as its main constituent. Preferably, the conveyor belt is a steel conveyor belt. Preferably, the rubber is a rubber selected from the group consisting of nitrile rubber, chloroprene rubber, natural rubber and silicone rubber.

Preferably, the guide rim is attached to the conveyor belt through an adhesive provided between the contact surface of the guide rim and a surface of the conveyor belt. The adhesive may be a one-coat adhesive for bonding polar elastomers to metals or other rigid substrates. An example of these adhesives is an adhesive consisting of reactive polymers and pigments in methyl isobutyl ketone (MIBK) and methyl ethyl ketone (MEK). One such adhesive is marketed by e.g. Rohm and Haas under the trade name MEGUM™ 3340-1. Other possible adhesives are any of the adhesives commercialized by e.g. Rohm and Haas under the trade names MEGUM and THIXON, and marketed as being suitable for bonding elastomers and rubbers to metal.

According to one embodiment, said predetermined bending has a bend radius r in the range of from 250xt-3000xt, wherein t is the thickness of the conveyor belt. Preferably, r>500×t. Preferably, r<1500xt.

Preferably, the thickness t of the conveyor belt is in the range of from 0.1mm-4 mm, preferably t>0.3 mm or preferably t<2 mm.

The present invention also relates to a conveyor arrangement, as stated in the appended claim 10.

The present invention also relates to a method of producing a conveyor belt as stated in the appended claim 11.

Preferably, the convexity of the convex base surface is adapted such that said residual stresses are induced in the guide rim upon the pressing of the convex base surface towards the peripheral surface of the conveyor belt into a generally flat state in which it defines the contact surface of the guide rim that is in contact with the conveyor belt. In other words, a convexity is chosen so that residual stresses will be induced in the guide rim which will result in the desired stress relief during a conceived predetermined bending of the conveyor belt, as defined for the conveyor belt according to the present invention.

Preferably, the convexity of the base surface, defined as the relation between height (h) and width (w) of the convex base surface, is in the range of from w/10000<h<w/100. Preferably, h>w/5000. The chosen width of the guide rim depends on the thickness and width of the conveyor belt. The convex base surface may, but need not necessarily, define the widest part of the guide rim. The guide rim may have any shape that makes it suitable for the purpose of guiding the conveyor belt on at least one roll provided with a corresponding lateral guide surface for engagement with the guide rim. If the guide rim is too wide and/or too bulky with regard to the thickness of the conveyor belt, it may cause an unwanted sagging of the conveyor belt where the latter runs unsupported. If the guide rim is not sufficiently wide and/or too high, it might be prone to plying. Therefore, typically, the guide rim has a height in the range of from 1-4 cm, and a width in the range of from 0.5-4 cm, preferably in the range of from 1-3 cm.

Preferably, said adhesive is applied to any of said convex base surface and said peripheral surface prior to the pressing of said convex base surface of the guide rim towards said peripheral surface, and, after said pressing, the adhesive is subjected to conditions, typically a heating operation, which causes the adhesive to bond the contact surface of the guide rim that is in contact with the conveyor belt to said peripheral surface..

Further features and advantages of the present invention will be presented in the following detailed description of embodiments of the present invention.

### BRIEF DESCRIPTION OF THE DRAWINGS

Hereinafter, by way of example, the invention will be described more in detail with reference to the annexed drawing, on which:
Fig. 1 is a side view of a conveyor arrangement according to the invention,
Fig. 2 is a view from above of a part of the conveyer arrangement shown in fig.1
Fig. 3 is a cross section of a part of a conveyor belt according to the invention,
Fig. 4 is a cross section of a guide rim provided on the conveyor belt in a non-bent position, with tensile and compressive stresses in the region of the contact surface of the guide rim indicated,
Fig. 5 is side view of a part of a conveyer belt according to the invention, subjected to a predetermined bending,
Fig. 6 is a cross section of a guide rim provided on the bent conveyor belt according to fig. 5, with tensile and compressive stresses indicated,
Figs. 7a-7c are cross sections showing steps of a method of producing a conveyor belt provided with a guide rim according to the invention,
Fig. 8 is a cross section of a conveyor belt provided with a guide rim according to prior art, when the conveyor belt is in a non-bent state, with stresses therein indicated, and
Fig. 9 is a cross section of a conveyor belt provided with a guide rim according to prior art, when the conveyor belt is in a bent state, and with stresses therein indicated.

### DETAILED DESCRIPTION OF THE INVENTION

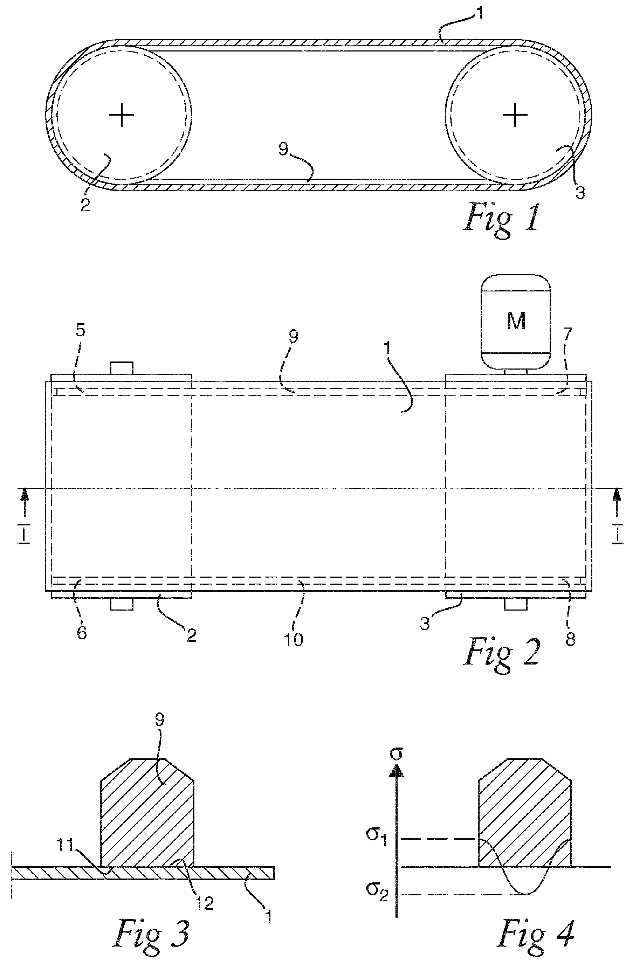

Fig. 1 shows a conveyor arrangement according to one embodiment of the invention. The conveyor arrangement comprises a conveyor belt 1 and rolls 2, 3 against which the conveyor belt 1 is supported and around which it defines a path. Preferably, the conveyor belt is a metal conveyor belt, preferably a steel conveyor belt. As seen in fig. 2, the arrangement also preferably comprises a drive unit, indicated with M and connected to one of the rolls 2, 3 for the purpose of generating a rotating motion of the latter, which will, in its turn generate a motion of the conveyor belt 1 along the path thereof. The drive unit M may be of any kind suitable for its purposes, such as an electric engine or the like. Here, the rolls 2, 3 comprise drums. However, it should be understood that each roll 2, 3 could as well comprise a set of parallel sheaves.

The rolls 2, 3 are provided with lateral guide surfaces defined by grooves 5, 6, 7, 8, indicated in fig. 2, which run circumferentially on an outer periphery of the respective roll 2, 3 and which are aimed for the purpose of receiving a respective guide rim 9, 10 that is provided on an outer surface of the conveyor belt 1. If the rolls are instead formed by sheaves, the lateral guide surfaces will be formed by the lateral surfaces of the sheaves. It is also conceivable that the lateral support surface is formed by a lateral end surface of the roll, irrespectively of the roll being formed like a drum or a set of sheaves. Accordingly, it is obviated that grooves is only one of several possible ways of embodying the lateral guide surfaces provided on the rolls. What is hereinafter mentioned with regard to the interaction between grooves and guide rim could thus be regarded as valid also for corresponding interaction between other embodiments of lateral guide surfaces and the guide rim. There may be one or more guide rims provided on the conveyor belt 1. Thus, even though this embodiment is described as comprised by two such guide rims, it should be understood that the number thereof may be different. The guide rims 9, 10 project from the surface of the conveyor belt 1 and engage the respective groove 5, 6, 7, 8. By the interaction of the grooves 5, 6, 7, 8 and the guide rims 9, 10, the conveyor belt 1 is guided along its path and prevented from being displaced in a lateral direction on the respective roll.

Fig. 3 shows a cross section of a one embodiment of a guide rim 9, as seen in a cross wise to the longitudinal direction of the guide rim. The guide rim 9 presents a contact surface 11 which bears against a peripheral surface 12 of the conveyor belt 1. The contact surface 11 of the guide rim 9 is attached to the peripheral surface of the conveyor belt 1 by means of an adhesive (not visible in the figure). Preferably, the guide rim 9 is comprised by a rubber, such as a nitrile rubber, a natural rubber, a chloroprene rubber or the like.

As a direct consequence of the design of the arrangement, each incremental part of the conveyor belt 1 will be subjected to a repeated bending as it travels through the path along which the conveyor belt 1 runs. Each incremental part of the guide rims 9, 10 will be subjected to a corresponding bending, and this bending will take place when that incremental part is in engagement with the grooves 5-8 of the rolls 2, 3. As an incremental part of the guide rim 9 is subjected to said bending, it is deformed and as a result thereof, a different stress state will appear in said incremental part compared to when it is not subjected to said bending. It has been noted that, upon such bending, in the region of the contact surface of the guide rim 9, 10 that is in contact with the conveyor belt, the lateral parts of the cross section thereof will be subjected to an increased compressive stress while the middle part between these lateral parts is subjected to an increased tensile stress. If no countermeasure is taken, the increased tensile stress will result in a tensile force that affects the middle part of the guide rim 9, 10 in a direction away from the peripheral surface of the conveyor belt 1, while the lateral parts of said contact surface are pressed towards the conveyor belt due to the increased tensile stress in those parts. The upcoming of such a stress state is inconvenient with regard to the fact that the guide rim is also likely to be subjected to further forces, such as lateral forces, as it engages any of the grooves 5-8. In order to avoid such stresses in the guide rim, the present invention teaches that the guide rim should have residual stresses in the non-bent state, and that these residual stresses should be such that they counteract and suppress the upcoming of the afore-mentioned stress state during the predetermined bending of the guide rim 9, 10.

Fig. 4 shows a cross section of an embodiment of the guide rim 9 in a non-bent state in which the requested residual stresses are indicated. σ₁ indicates tensile stresses that are induce in opposite lateral regions of the contact surface 11 of the guide rim and σ₂ indicates an induced compressive stress in a region between said lateral regions. The induced tensile stresses σ₁ generate a tensile force on the contact surface in a direction away from the conveyor belt and the induced compressive stress σ₂ generates a compressive force on the contact surface of the guide rim that is in contact with the conveyor belt towards the conveyor belt. The level of the induced tensile stresses σ₁ and the induced compressive stress σ₂ should be adapted to a conceived predetermined bending which the conveyor belt is assumed to be subjected to during use thereof, i.e. during passage of rolls that direct the conveyor belt.

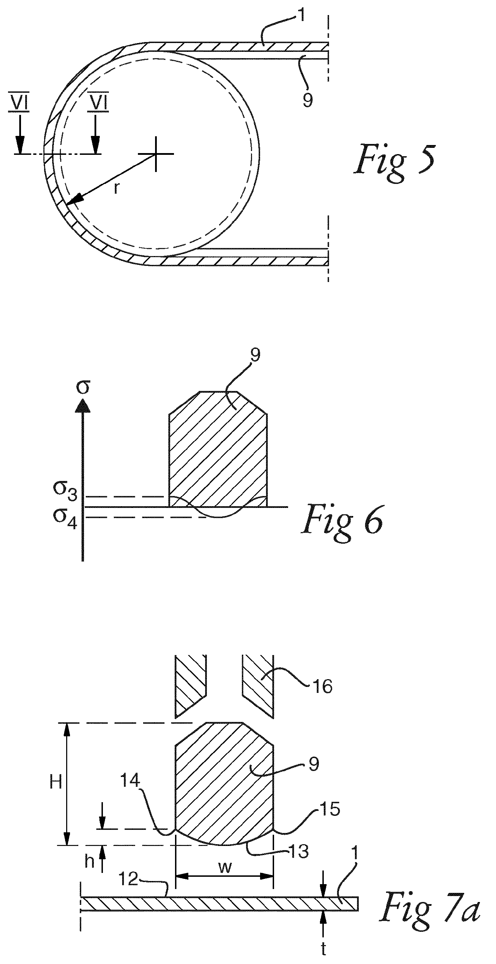

Fig. 5 shows a part of the conveyor belt 1 which is subjected to bending as it passes a roll 2 of the conveyor arrangement. The bend radius, which in this particular case also happens to be generally the radius of the roll 2, is indicated with r. The guide rim 9, 10, in its non-bent state, is provided with the afore-mentioned residual stresses σ₁, σ₂ that will counteract the upcoming of an undesired stress state in the bent state of the guide rim 9, 10.

Fig. 6 shows the stress state appearing in the contact surface 11 of an incremental part of the guide rim 9, 10 during the bending thereof shown in fig. 5. The remaining stresses, indicated with σ₃ and σ₄, are at a very low level. Ideally, the residual stresses σ₁, σ₂ should be eliminated as a result of the counteracting stresses that are induced in the guide rim as a result of the bending thereof, but it might be difficult to arrive at such a result, and therefore it might be preferred to adapt the residual stresses σ₁, σ₂ to the predetermined bending such that there is no shift from tensile stress to compressive stress in the lateral regions and middle region of the contact surface respectively. Thereby, as shown in fig. 6, small remaining tensile stresses σ₃ is accepted in the lateral regions of the contact surface 11 of the guide rim 9, 10 and a small remaining compressive stress σ₄ is accepted in the middle region between said lateral regions. In any case, the level of the remaining stresses σ₃ and σ₄ (in absolute terms) should be considerably lower than the level would have been if no residual stresses would have been provided, preferably less than half the absolute value otherwise obtained.

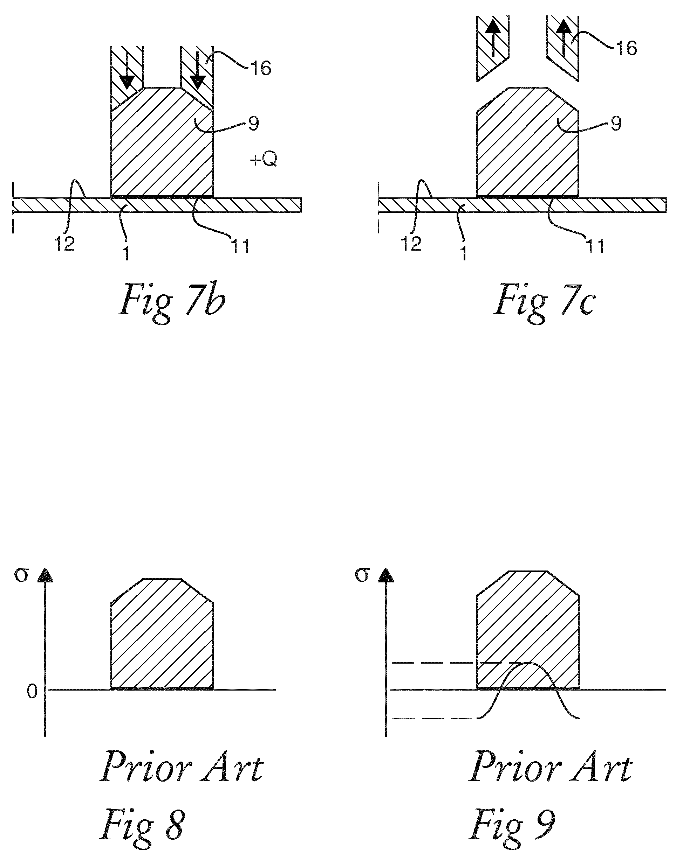

Figs. 7a, 7b and 7c show essential steps of a method of inducing the afore-mentioned residual stresses in a guide rim 9 that is attached to a peripheral surface of a conveyer belt 1 according to the invention. As seen in a cross section perpendicular to the longitudinal direction of the guide rim 9, the latter is provided with a convex base surface 13. The convex base surface 13 has a width w and, form a line 13 that extends between two opposite lateral ends 14, 15 of the convex base surface 13, the convex base surface 13 presents a height h. The convexity of the base surface can be defined by the relation between w and h. Preferably, w/10000<h<w/100. Normally, for cases in which the thickness of the conveyor belt is in the range of from 0.1-4 mm, preferably 0.3-2 mm, the width w of the convex base surface 13 of the guide rim 9, 10 is equal to or above 5 mm, preferably equal to or above 10 mm, and most preferably equal to or above 12.5 mm in order to ensure sufficient lateral stability of the guide rim 9, 10, and, preferably, the width w of the convex base surface 13 of the guide rim 9, 10 is equal to or below 100 mm, preferably equal to or below 50 mm, and most preferably equal to or below 30 mm in order not to negatively affect the conveyor belt. H is the height of the guide rim 9, 10. Preferably H ≥ w/10, and more preferably H ≥ w/2 in order to ensure sufficient engagement with the lateral guide surface of a roll, such as the grooves of any of the rolls 2, 3. Preferably, H ≤ wx3, and more preferably H ≤ wx2 in order to ensure sufficient lateral stability of the guide rim 9, 10.

The chosen convexity depends on the predetermined bend radius r that each incremental part of the guide rim 9 can be expected to be repeatedly subjected to while traveling along the path that the conveyor belt 1 defines in a specific conveyor arrangement, such as the one exemplified in figs. 1 and 2. Also, the material, size and geometric shape of the rubber guide rim 9, 10 will be decisive for which convexity chosen, as a means for obtaining the requested residual stresses therein, once the guide rim has been attached to the conveyor belt 1. However, for most applications that can be conceived for the time being, the radius r will be in the range of from tx250 - tx3000, wherein t is the thickness of the conveyor belt 1. Preferably the radius r, will be in the range of from tx350 - tx500.

As can be seen in fig. 7a, a press tool 16 is used for pressing the convex base surface 13 of the guide rim 9, 10 against the peripheral surface 12 of the conveyor belt 1. Previously to said pressing, any of said peripheral surface 12 or said convex base surface 13 has been provided with an adhesive. The adhesive may be any kind of suitable resin as mentioned hereinbefore or hereinafter, preferably a heat-curable resin.

Preferably, the upper part of the guide rim 9, 10, against which the press tool 16 is applied, has a cross section with the shape of a truncated cone. The press tool 16 is applied against the opposite bevelled surfaces of said truncated cone with corresponding bevelled surfaces of its own. Thereby, the lateral regions of the convex base surface 13 can be pressed towards the conveyor belt 1 without excessive force being applied to the central part of the guide rim 9, 10. Preferably, the part of the conveyor belt 1 onto which the guide rim 9, 10 is applied by means of the press tool 16 is in a generally non-bent state during said application.

As can be seen in fig. 7b, the press tool 16 presses the guide rim 9, 10 towards the peripheral surface 17 of the conveyor belt 1 such that the convex base surface 13 of the guide rim 9, 10 is flattened out and defines the contact surface 11 previously mentioned. Heat, indicated with Q in fig. 7b is provided in order to cause a chemical reaction of the adhesive, such as curing thereof. This can be achieved by allowing the conveyor belt to pass a heat source directed towards the region of the guide rim 9, 10, or by any other suitable method, which will be obvious the person skilled in the art. As an alternative, the adhesive is of a kind that will react chemically and form said bonding without any particular heating, or heating is provided before the guide rim 9, 10 is pressed towards the conveyor belt, such that said chemical reaction takes place immediately when the guide rim 9, 10 is pressed against the conveyor belt 1.

After adhesion has been completed, the pressure applied by means of the press tool 16 is relieved, and the press tool 16 is retreated from the guide rim 9, 10, as indicated in fig. 7c. Due to the provision of the convexity of the convex base surface 13 of the guide rim 9, 10, the guide rim is now provided with the previously described residual stresses σ₁ and σ₂.

Fig. 8 shows the cross section of a conveyor belt provided with a guide rim according to prior art, wherein the incremental part of the conveyor belt that is shown is not subjected to any bending. In other words, the cross section corresponds to the one presented in fig. 4. The cross section of fig. 8 shows that there are essentially no residual stresses induced in guide rim.

Fig. 9 illustrates the same cross section as fig. 8, but with the difference that the shown incremental part of the conveyor belt is now subjected to a bending corresponding to the bending that the conveyor belt would be subjected to upon passage of the outer periphery of a directing roll or the like, with a groove of which the guide rim of the conveyor belt is assumed be in engagement. As can be seen, stresses are induced into the guide rim in the region of its contact surface as a consequence of the specific bending thereof. In particular, it should be noted that compressive stresses will be induced in the opposite lateral regions of the guide rim while tensile stresses are induced in the region between these regions. This stress state should be compared to the stress state that a corresponding incremental part of a guide rim of the present invention would present when subjected to the corresponding bending, as shown in fig. 6. The provision of the induced residual stresses according to the present invention obviously results in less stresses in the bent state of the guide rim.

## Claims

1. A conveyor belt (1) provided with at least one guide rim (9, 10) attached thereto, wherein the guide rim (9, 10) extends in a longitudinal direction of the conveyor belt (1) such that it enables guiding of the conveyor belt (1) along a lateral guide surface (5, 6, 7, 8) provided on an outer periphery of a roll (2, 3) by means of which the direction of the conveyor belt (1) is changed and by means of which the conveyor belt (1) is subjected to a predetermined bending, and wherein the guide rim (9, 10) has a contact surface (11) that is in contact with the conveyor belt (1), **characterised in that**, in a position in which the conveyor belt (1) is not subjected to any bending in the longitudinal direction thereof, as seen in a cross section cross wise to the longitudinal direction of the guide rim (9, 10), the guide rim (9, 10) presents residual stresses (σ₁, σ₂) comprised by induced tensile stresses (σ₁) in opposite lateral regions of said contact surface (11) and an induced compressive stress (σ₂) in a region between said lateral regions, said tensile stress (σ₁) generating a tensile force on said contact surface (11) in a direction away from the conveyor belt (1) and said compressive stress generating a compressive force on said contact surface (11) towards the conveyor belt (1).

2. The conveyor belt (1) according to claim 1, **characterised in that** the level of the induced tensile stresses (σ₁) and the induced compressive stress (σ₂) respectively are adapted to the dimension of said predetermined bending of the conveyor belt (1), such that the maximum tensile stress generated at said contact surface (11) upon said predetermined bending is less than the maximum tensile stresses (σ₁) induced at said contact surface (11) when the conveyor belt (1) is not subjected to bending in the longitudinal direction thereof.

3. The conveyor belt (1) according to claim 1 or 2, **characterised in that** the level of the induced tensile stresses (σ₁) and the induced compressive stress (σ₂) respectively are adapted to the dimension of said predetermined bending of the conveyor belt (1), such that upon the conceived bending of the conveyor belt (1), the absolute value of the residual stresses in the region of said contact surface (11) is reduced compared to when the conveyor belt (1) is not subjected to bending in the longitudinal direction thereof.

4. The conveyor belt (1) according to claim 3, **characterised in that** the absolute value of the residual stresses in said region are reduced to less than half of its value compared to when the conveyor belt (1) is not subjected to bending in the longitudinal direction thereof.

5. The conveyor belt (1) according to any one of claims 2-4, **characterised in that** the level of the induced tensile stresses (σ₁) is adapted to a predetermined bending of the conveyor belt (1) such that it becomes generally zero when the conveyor belt (1) is subjected to said predetermined bending.

6. The conveyor belt (1) according to any one of claims 1-5, **characterised in that** the conveyor belt (1) is of metal and **in that** the guide rim (9, 10) comprises rubber as its main constituent.

7. The conveyor belt (1) according to any one of claims 1-6, **characterised in that** the guide rim (9, 10) is attached to the conveyor belt (1) through an adhesive provided between said contact surface (11) and a surface of the conveyor belt (1).

8. The conveyor belt (1) according to anyone of claims 1-7, **characterised in that** said predetermined bending has a bend radius (r) in the range of from 250xt-3000xt, wherein t is the thickness of the conveyor belt (1).

9. The conveyor belt (1) according to any one of claims 1-8, **characterised in that** the thickness (t) of the conveyor belt (1) is in the range of from 0.1mm-4 mm.

10. A conveyor arrangement, **characterised in that** it comprises a conveyor belt (1) according to any one of claims 1-9 and at least one roll (2, 3) by which the conveyor belt (1) is supported and by means of which the conveyor belt (1) is redirected and subjected to said predetermined bending, said at least one roll (2, 3) comprising at least one lateral guide surface (5, 6, 7, 8) provided on an outer periphery thereof for the purpose of laterally supporting said guide rim (9, 10), thereby enabling the guide rim (9, 10) to guide the conveyor belt (1) along a predetermined path and at a predetermined position on the at least one roll (2, 3).

11. A method of producing a conveyor belt (1) according to any one of claims 1-9, wherein the contact surface (11) of the guide rim (9, 10) that is in contact with the conveyor belt (1) is bonded to a peripheral surface (12) of the conveyor belt (1) by means of an adhesive provided between said contact surface (11) and said peripheral surface (12), whereby said peripheral surface (12) is generally flat, **characterized in that** , the guide rim (9, 10) is provided with a convex base surface (13), as seen in a cross section cross wise to the longitudinal direction thereof, and **in that** said convex base surface (13) is pressed towards said peripheral surface (12) and deformed to a generally flat state, thereby defining said contact surface (11).

12. A method according to claim 11, **characterised in that** the convexity of said convex base surface (13) is adapted such that said residual stresses (σ₁, σ₂) are induced in the guide rim (9, 10) upon said pressing of said convex base surface (13) towards said peripheral surface (12) into said generally flat state in which it defines said contact surface (11).

13. A method according to claim 11 or 12, **characterised in that** the convexity of the convex base surface (13), defined as the relation between height (h) and width (w) of said convex base surface (13), is in the range of from w/10000<h<w/100.

14. A method according to any one of claims 11-13, **characterised in that** said adhesive is applied to any of said convex base surface (13) and said peripheral surface (12) prior to the pressing of said convex base surface (13) of the guide rim (9, 10) towards said peripheral surface (12), and that, after said pressing, the adhesive is subjected to a heating operation that causes the adhesive to bond said contact surface (11) to said peripheral surface (12).

## Patentansprüche

1. Förderband (1), welches mit zumindest einem Führungsrand (9, 10) versehen ist, welcher daran angebracht ist, wobei der Führungsrand (9, 10) sich in einer Längsrichtung des Förderbandes (1) erstreckt, so dass er das Führen des Förderbandes (1) entlang einer seitlichen Führungsfläche (5, 6, 7, 8) erlaubt, welche an dem äußeren Umfang einer Rolle (2, 3) vorgesehen ist, mit deren Hilfe die Richtung des Förderbandes (1) verändert wird und durch welche das Förderband (1) einer vorbestimmten Biegung ausgesetzt wird, und wobei der Führungsrand (9, 10) eine Kontaktfläche (11) hat, die mit dem Förderband (1) in Kontakt steht, **dadurch gekennzeichnet, dass** in einer Position, in welcher das Förderband (1) keinerlei Biegung in seiner Längsrichtung ausgesetzt ist, gesehen im Querschnitt senkrecht zur Längsrichtung des Führungsrandes (9, 10), der Führungsrand (9, 10) unter Restspannungen (σ₁, σ₂) steht, die aus induzierten Zugspannungen (σ₁) in entgegengesetzten seitlichen Richtungen der Kontaktfläche (11) und aus einer induzierten Druckspannung (σ₂) in einem Bereich zwischen den seitlichen Bereichen bestehen, wobei die Zugspannung (σ₁) eine Zugkraft auf die Kontaktfläche (11) in einer Richtung weg von dem Förderband (1) ausübt und die Druckspannung eine Druckkraft auf die Kontaktfläche (11) in Richtung des Förderbandes (1) ausübt.

2. Förderband (1) nach Anspruch 1, **dadurch gekennzeichnet, dass** das Niveau der induzierten Zugspannungen (σ₁) bzw. der induzierten Druckspannung (σ₂) auf das Ausmaß der vorbestimmten Biegung des Förderbandes (1) ausgelegt ist, so dass die maximale Zugspannung, die an der Kontaktfläche (11) bei dem vorbestimmten Biegen ausgeübt wird, geringer ist als die maximalen Zugspannungen (σ₁), die an der Kontaktfläche (11) induziert werden, wenn das Förderband (1) keiner Biegung in seiner Längsrichtung ausgesetzt ist.

3. Förderband (1) nach Anspruch 1 oder 2, **dadurch gekennzeichnet, dass** das Niveau der induzierten Zugspannungen (σ₁) bzw. der induzierten Druckspannung (σ₂) auf das Ausmaß der vorbestimmten Biegung des Förderbandes (1) derart ausgelegt ist, dass bei dem erwarteten Biegen des Förderbandes (1) der absolute Wert der Restspannungen in dem Bereich der Kontaktfläche (11) reduziert wird im Vergleich zu der Situation, in welcher das Förderband (1) keiner Biegung in seiner Längsrichtung ausgesetzt ist.

4. Förderband (1) nach Anspruch 3, **dadurch gekennzeichnet, dass** der absolute Wert der Restspannungen in dem Bereich auf weniger als die Hälfte desjenigen Wertes reduziert wird, bei welchem das Förderband einer Biegung in seiner Längsrichtung nicht ausgesetzt ist.

5. Förderband (1) nach einem der Ansprüche 2-4, **dadurch gekennzeichnet, dass** das Niveau der induzierten Zugspannungen (σ₁) auf ein vorbestimmtes Biegen des Förderbandes (1) ausgelegt ist, so dass sie in etwa Null werden, wenn das Förderband (1) dem vorbestimmten Biegen ausgesetzt wird.

6. Förderband (1) nach einem der Ansprüche 1-5, **dadurch gekennzeichnet, dass** das Förderband aus Metall besteht und dass der Führungsrand (9, 10) Gummi als Hauptbestandteil aufweist.

7. Förderband (1) nach einem der Ansprüche 1-6, **dadurch gekennzeichnet, dass** der Führungsrand (9, 10) an dem Förderband (1) über einen Klebstoff angebracht ist, der zwischen der Kontaktfläche (11) und einer Oberfläche des Förderbandes (1) vorgesehen ist.

8. Förderband (1) nach einem der Ansprüche 1-7, **dadurch gekennzeichnet, dass** die vorbestimmte Biegung einen Biegeradius (r) im Bereich von 250xt-3000xt hat, wobei t die Dicke des Förderbandes (1) ist.

9. Förderband (1) nach einem der Ansprüche 1-8, **dadurch gekennzeichnet, dass** die Dicke (t) des Förderbandes (1) im Bereich von 0,1 mm-4 mm liegt.

10. Förderanordnung, **dadurch gekennzeichnet, dass** sie ein Förderband (1) nach einem der Ansprüche 1-9 und zumindest eine Rolle (2, 3), durch welche das Förderband (1) gestützt wird und mit dessen Hilfe das Förderband (1) umgelenkt und dem vorbestimmten Biegen ausgesetzt wird, aufweist, wobei die zumindest eine Rolle (2, 3) zumindest eine seitliche Führungsfläche (5, 6, 7, 8) aufweist, die an einer äußeren Umfangsseite derselben vorgesehen ist zu dem Zweck, den Führungsrand (9, 10) seitlich zu stützen, um dadurch zu ermöglichen, dass der Führungsrand (9, 10) das Förderband (1) entlang eines vorbestimmten Pfades und in einer vorbestimmten Position auf der zumindest einen Rolle (2, 3) führt.

11. Verfahren zum Herstellen eines Förderbandes (1) nach einem der Ansprüche 1-9, wobei die Kontaktfläche (11) des Führungsrandes (9, 10), welche mit dem Förderband (1) in Kontakt steht, mit einer Umfangsfläche (12) des Förderbandes (1) mit Hilfe eines Klebstoffs, der zwischen der Kontaktfläche (11) und der Umfangsfläche (12) vorgesehen ist, verbunden wird, wodurch die Umfangsoberfläche (12) im Wesentlichen eben ist, **dadurch gekennzeichnet, dass** der Führungsrand (9, 10), gesehen in einem Querschnitt quer zur Längsrichtung desselben mit einer konvexen Basisfläche (13) versehen ist, und dass die konvexe Basisfläche (13) in Richtung der Umfangsfläche (12) gedrückt und in einen in etwa flachen Zustand verformt wird und dadurch die Kontaktfläche (11) definiert.

12. Verfahren nach Anspruch 11, **dadurch gekennzeichnet, dass** die Konvexität der konvexen Basisfläche (13) so ausgelegt ist, dass Restspannungen (σ₁, σ₂) in dem Führungsrand (9, 10) induziert werden, wenn die konvexe Basisfläche (13) in Richtung der peripheren Fläche (12) in den in etwa flachen Zustand gedrückt wird, in welchem sie die Kontaktfläche (11) bildet.

13. Verfahren nach Anspruch 11 oder 12, **dadurch gekennzeichnet, dass** die Konvexität der konvexen Basisfläche (13), definiert als Verhältnis zwischen Höhe (h) und Breite (w) der konvexen Basisfläche (13), im Bereich von w/10000<h<w/100 liegt.

14. Verfahren nach einem der vorstehenden Ansprüche 11-13, **dadurch gekennzeichnet, dass** ein Klebemittel entweder an der konvexen Basisfläche (13) und der umlaufenden Fläche (12) vor dem Andrücken der konvexen Basisfläche (13) des Führungsrandes (9, 10) in Richtung der Umfangsfläche (12) aufgebracht wird und dass nach dem Andrücken der Klebstoff einem Heizvorgang ausgesetzt wird, der bewirkt, dass das Klebemittel die Kontaktfläche (11) mit der Umfangsfläche (12) verbindet.

## Revendications

1. Bande de convoyeur (1) dotée d'au moins un bord de guidage (9, 10) fixé à celle-ci, dans lequel le bord de guidage (9, 10) s'étend dans une direction longitudinale de la bande de convoyeur (1) de sorte qu'il permette un guidage de la bande de convoyeur (1) le long d'une surface de guidage latérale (5, 6, 7, 8) prévue sur une périphérie externe d'un rouleau (2, 3) au moyen duquel la direction de la bande de convoyeur (1) est modifiée et au moyen duquel la bande de convoyeur (1) est soumise à une flexion prédéterminée, et dans laquelle le bord de guidage (9, 10) a une surface de contact (11) qui est en contact avec la bande de convoyeur (1), **caractérisée en ce que**, dans une position dans laquelle la bande de convoyeur (1) n'est soumise à aucune flexion dans sa direction longitudinale, telle qu'observée en section transversale de manière transversale par rapport à la direction longitudinale du bord de guidage (9, 10), le bord de guidage (9, 10) présente des contraintes résiduelles (σ₁, σ₂) constituées de contraintes de traction induites (σ₁) dans des régions latérales opposées de ladite surface de contact (11) et d'une contrainte de compression induite (σ₂) dans une région entre lesdites régions latérales, ladite contrainte de traction (σ₁) générant une force de traction sur ladite surface de contact (11) dans une direction s'écartant de la bande de convoyeur (1) et ladite contrainte de compression générant une force de compression sur ladite surface de contact (11) en direction de la bande de convoyeur (1).

2. Bande de convoyeur (1) selon la revendication 1, **caractérisée en ce que** le niveau des contraintes de traction induites (σ₁) et de la contrainte de compression induite (σ₂) sont respectivement adaptés à la dimension de ladite flexion prédéterminée de la bande de convoyeur (1), de sorte que la contrainte de traction maximale générée au niveau de ladite surface de contact (11) lors de ladite flexion prédéterminée soit inférieure aux contraintes de traction maximales (σ₁) induites au niveau de ladite surface de contact (11) lorsque la bande de convoyeur (1) n'est pas soumise à une flexion dans sa direction longitudinale.

3. Bande de convoyeur (1) selon la revendication 1 ou 2, **caractérisée en ce que** le niveau des contraintes de traction induites (σ₁) et de la contrainte de compression induite (σ₂) sont respectivement adaptés à la dimension de ladite flexion prédéterminée de la bande de convoyeur (1), de sorte que lors de la flexion conçue de la bande de convoyeur (1), la valeur absolue des contraintes résiduelles dans la région de ladite surface de contact (11) est réduite par comparaison avec la situation lorsque la bande de convoyeur (1) n'est pas soumise à une flexion dans sa direction longitudinale.

4. Bande de convoyeur (1) selon la revendication 3, **caractérisée en ce que** la valeur absolue des contraintes résiduelles dans ladite région sont réduites à moins que la moitié de sa valeur par comparaison avec la situation lorsque la bande de convoyeur (1) n'est pas soumise à une flexion dans sa direction longitudinale.

5. Bande de convoyeur (1) selon l'une quelconque des revendications 2 à 4, **caractérisée en ce que** le niveau des contraintes de traction induites (σ₁) est adapté à une flexion prédéterminée de la bande de convoyeur (1) de sorte qu'il devienne généralement nul lorsque la bande de convoyeur (1) est soumise à ladite flexion prédéterminée.

6. Bande de convoyeur (1) selon l'une quelconque des revendications 1 à 5, **caractérisée en ce que** la bande de convoyeur (1) est faite de métal et **en ce que** le bord de guidage (9, 10) comprend du caoutchouc comme constituant principal.

7. Bande de convoyeur (1) selon l'une quelconque des revendications 1 à 6, **caractérisée en ce que** le bord de guidage (9, 10) est fixé à la bande de convoyeur par le biais d'un élément adhésif prévu entre ladite surface de contact (11) et une surface de la bande de convoyeur (1).

8. Bande de convoyeur (1) selon l'une quelconque des revendications 1 à 7, **caractérisée en ce que** ladite flexion prédéterminée a rayon de courbure (r) dans la plage de 250xt à 3000xt, où t est l'épaisseur de la bande de convoyeur (1).

9. Bande de convoyeur (1) selon l'une quelconque des revendications 1 à 8, **caractérisée en ce que** l'épaisseur (t) de la bande de convoyeur (1) se trouve dans la plage de 0,1 mm à 4 mm.

10. Agencement de convoyeur, **caractérisé en ce qu'**il comprend une bande de convoyeur (1) selon l'une quelconque des revendications 1 à 9 et au moins un rouleau (2, 3) par lequel la bande de convoyeur (1) est supportée et au moyen duquel la bande de convoyeur (1) est redirigée et soumise à ladite flexion prédéterminée, ledit au moins un rouleau (2, 3) comprenant au moins une surface de guidage latérale (5, 6, 7, 8) prévue sur une périphérie externe de celui-ci dans le but de supporter latéralement ledit bord de guidage (9, 10), en permettant de cette manière au bord de guidage (9, 10) de guider la bande de convoyeur (1) le long d'un trajet prédéterminé et à une position prédéterminée sur le au moins un rouleau (2, 3).

11. Procédé de production d'une bande de convoyeur (1) selon l'une quelconque des revendications 1 à 9, dans lequel la surface de contact (11) du bord de guidage (9, 10) qui est en contact avec la bande de convoyeur (1) est collée à une surface périphérique (12) de la bande de convoyeur (1) au moyen d'un élément adhésif prévu entre ladite surface de contact (11) et ladite surface périphérique (12), grâce à quoi ladite surface périphérique (12) est généralement plate, **caractérisée en ce que** le bord de guidage (9, 10) est doté d'une surface de base convexe (13), telle qu'observée en section transversale de manière transversale par rapport à sa direction longitudinale, et **en ce que** ladite surface de base convexe (13) est appuyée en direction de ladite surface périphérique (12) et déformée jusqu'à un état généralement plat, en définissant de cette manière ladite surface de contact (11).

12. Procédé selon la revendication 11, **caractérisée en ce que** la convexité de ladite surface de base convexe (13) est adaptée de sorte que lesdites contraintes résiduelles (σ₁, σ₂) soient induites dans le bord de guidage (9, 10) lors de ladite pression de ladite surface de base convexe (13) en direction de ladite surface périphérique (12) dans un état généralement plat dans lequel elle définit ladite surface de contact (11).

13. Procédé selon la revendication 11 ou 12, **caractérisée en ce que** la convexité de la surface de base convexe (13), définie comme la relation entre la hauteur (h) et la largeur (w) de ladite surface de base convexe (13), se trouve dans la plage de w/10000<h<w/100.

14. Procédé selon l'une quelconque des revendications 11 à 13, **caractérisé en ce que** ledit élément adhésif est appliqué sur l'une quelconque de ladite surface de base convexe (13) et de ladite surface périphérique (12) avant la pression de ladite surface de base convexe (13) du bord de guidage (9, 10) en direction de ladite surface périphérique (12), et **en ce que**, après ladite pression, l'élément adhésif est soumis à une opération de chauffage qui amène l'élément adhésif à coller ladite surface de contact (11) sur ladite surface périphérique (12).
